# EUROPÄISCHE PATENTANMELDUNG

(11) **EP 4 703 073 A1**
(43) Veröffentlichungstag der Anmeldung: **04.03.2026**
(21) Anmeldenummer: 24197143.1
(22) Anmeldetag: 29.08.2024
(51) Int. Cl.: B23D 19/06, B23D 35/00, B26D 1/00, B26D 1/22, B26D 1/147, B26D 3/12, B26D 7/18, B26D 7/26, H01M 4/04

(54) **VORRICHTUNG ZUM SCHNEIDEN VON ELEKTRODENFOLIEN**

(71) Anmelder: VARTA Microbattery GmbH, 73479 Ellwangen Jagst (DE)
(72) Erfinder: Barenthin, Nils, 73479 Ellwangen (DE); Gaugler, Andreas, 73479 Ellwangen (DE); Kienle, Daniel, 86720 Nördlingen (DE)
(74) Vertreter: Ostertag & Partner Patentanwälte mbB

(57) **Zusammenfassung**

Eine Vorrichtung zum Schneiden einer bandförmigen Elektrodenfolie (10) in schmalere Streifen (12a, 12b ,12c) hat eine zwei parallele Wellen (26, 28), die in eine gegenläufige Drehung versetzbar sind. An der ersten Welle (26) ist ein erstes Paar von ersten Kreismessern (32a, 32b) und an der zweiten Welle (28) ein zweites Paar von zweiten Kreismessern (42a, 42b) drehfest befestigt. Jedes Kreismesser (32a, 32b, 42a, 42b) hat eine radial nach außen weisende zylindrische Außenfläche (34a, 34b, 44a, 44b) und eine ebene kreisringförmige Seitenfläche (36a, 36b, 46a, 46b), die senkrecht zur jeweiligen Drehachse verläuft und dort, wo sie an die Außenfläche (34a, 34b, 44a, 44b) angrenzt, eine umlaufende Schneide (38a, 38b, 48a, 48b) bildet. Die Schneiden (48a, 48b) der zweiten Kreismesser (42a, 42b) des zweiten Paars sind einander zugewandt und durch einen umlaufenden Zwischenraum (50) voneinander getrennt. Die Schneiden (38a, 38b) der ersten Kreismesser (32a, 32b) sind voneinander abgewandt und greifen so in den Zwischenraum (50) ein, dass aneinander angrenzende erste und zweite Kreismesser (32a, 32b, 42a, 42b) zur Erzeugung jeweils einer Schnittkante in der Elektrodenfolie (10) zusammenwirken.

## Beschreibung

Die Erfindung betrifft eine Vorrichtung, mit der Elektrodenbänder während der Batterieherstellung in schmale Streifen geschnitten werden können.

### ANWENDUNGSGEBIET UND STAND DER TECHNIK

Der Begriff "Batterie" meinte ursprünglich mehrere in Serie geschaltete galvanische Zellen. Heute werden jedoch auch einzelne galvanische Zellen häufig als Batterie bezeichnet. Bei der Entladung einer galvanischen Zelle findet eine energieliefernde chemische Reaktion statt, die sich aus zwei elektrisch miteinander gekoppelten, aber räumlich voneinander getrennten Teilreaktionen zusammensetzt. An der negativen Elektrode werden in einem Oxidationsprozess Elektronen freigesetzt, resultierend in einem Elektronenstrom über einen äußeren Verbraucher zur positiven Elektrode, von der eine entsprechende Menge an Elektronen aufgenommen wird. An der positiven Elektrode findet also ein Reduktionsprozess statt. Gleichzeitig kommt es zu einem der Elektrodenreaktion entsprechenden lonenstrom innerhalb der Zelle. Dieser lonenstrom wird durch einen ionenleitenden Elektrolyten gewährleistet. In sekundären Zellen und Batterien ist diese Entladereaktion reversibel, es besteht also die Möglichkeit, die bei der Entladung erfolgte Umwandlung chemischer Energie in elektrische Energie umzukehren.

Unter den bekannten sekundären Zellen und Batterien werden vergleichsweise hohe Energiedichten insbesondere von Lithium-Ionen-Batterien erreicht. Diese enthalten in vielen Fällen einen Zellenstapel (Stack), der aus mehreren Einzelzellen besteht. Insbesondere Batterien mit sehr hohen Kapazitäten weisen aber meist Wickelzellen (Coils oder Jellyrolls) auf. Diese lassen sich in sehr hoher Geschwindigkeit produzieren und, verbunden damit, auch zu vergleichsweise geringen Kosten.

Wickelzellentechnologie eignet sich sowohl zum Bau von prismatischen Zellen als auch von Rundzellen.

Bei den Zellen einer Lithium-Ionen-Batterie handelt es sich meist um ein Ensemble aus Elektroden- und Separatorfolien mit der Sequenz positive Elektrode/Separator/negative Elektrode. Häufig werden solche Einzelzellen als sogenannte Bi-zellen mit den möglichen Sequenzen negative Elektrode/Separator/positive Elektrode/Separator/negative Elektrode oder positive Elektrode/Separator/negative Elektrode/Separator/positive Elektrode hergestellt. Die Elektroden umfassen dabei üblicherweise metallische Stromkollektoren, die meist in Form von Flächengebilden vorliegen.

In der Regel werden die beschriebenen Zellen für Lithium-Ionen-Batterien in einem mehrstufigen Verfahren produziert. Derartige Verfahren sind beispielsweise aus der DE 102010032770 A1 oder aus der US 2010/0081052 A1 bekannt.

Bei den meisten gängigen Verfahren werden in einem ersten Schritt die erwähnten Elektrodenfolien hergestellt und anschließend mit einer oder mehreren Separatorfolien zu den erwähnten Elektroden-Separator-Ensembles kombiniert. Meist werden Elektroden und Separatoren in einem Laminationsschritt miteinander verbunden. Sie können jedoch auch in Form eines losen Ensembles weiter gehandhabt werden.

Zur Herstellung der Elektrodenfolien wird ein Elektrodenband hergestellt, welches aus einem elektrisch leitfähigen Kollektorband sowie einem hierauf einseitig oder beidseitig aufgebrachten Elektrodenmaterial besteht. Das Elektrodenmaterial wird üblicherweise in Form einer hochviskosen Masse mittels einer geeigneten Düse und/oder unter Nutzung eines Rakels auf dem Kollektorband aufgebracht, wobei dieses Aufbringen der Elektrodenmasse vorzugweise quasi-kontinuierlich erfolgt, indem das Kollektorband an einer Aufbringungsstation entlanggeführt wird. Üblicherweise bleiben in Förderrichtung erstreckte Randbereich des Kollektorbandes und/oder auch zentrale Teilbereiche frei von Elektrodenmaterial, beispielsweise um diese Bereiche später als Kontaktbereiche für Ableiter zu verwenden. Nach dem Aufbringen des Elektrodenmaterials schließt sich üblicherweise eine Trocknungsstation an, an der das Trägerlösungsmittel aus der Elektrodenmasse entweicht. Das verbleibende getrocknete Elektrodenmaterial ist üblicherweise von Poren durchsetzt, so dass meist eine Verdichtung zur Erzielung einer höheren Energiedichte folgt. Dies wird auch mit dem Begriff des Kalandrierens beschrieben.

Die Elektrodenfolie wird anschließend in kleinere Stücke zerschnitten, die auf die Abmessungen der zu formenden Elektroden zugeschnitten sind. Bei Wickelzellen wird die Elektrodenfolie in schmale Streifen geschnitten, bevor diese auf einen Wickelkern aufgewickelt werden.

Dieser Schnittvorgang (engl. *slicing*) ist technologisch anspruchsvoll. Da das getrocknete und verdichtete Elektrodenmaterial spröde ist, kann beim mechanischen Zerschneiden mit Hilfe von rotierenden Kreismessern Elektrodenmaterial absplittern, was zu unsauberen Schnittkanten der Elektrodenfolie führt. Dies hat wiederum zur Folge, dass sich beim nachfolgenden Wickeln die Elektrodenstreifen seitlich verschieben (sog. "Verlaufen"). Solche nicht exakt gewickelten Elektrodenstreifen beeinträchtigen in der Regel die Leistungsfähigkeit und Lebensdauer der späteren Batterie. Das Verlaufen während des Wickelns führt zu einem Qualitätsmangel, der bei hochwertigen Produkten nicht toleriert werden kann und folglich zum Ausschuss führt.

Zudem kann sich das abgesplitterte Elektrodenmaterial trotz Absaugeinrichtungen teilweise in Form kleiner Partikel auf den Kreismessern absetzen. Dies wirkt sich negativ auf die Schnittqualität aus, wodurch noch mehr Elektrodenmaterial absplittert.

Um eine hohe Qualität der Schnittkanten zu gewährleisten, werden teilweise Laserscanner eingesetzt, die Absplitterungen und Welligkeiten erkennen und bei Bedarf direkt in die Steuerung des Schnittvorgangs eingreifen können. Auf diese Weise lässt sich außerdem frühzeitig erkennen, wenn die Kreismesser nachgeschärft werden müssen. Das grundsätzliche Problem der ungleichmäßigen Schnittkanten lässt sich durch eine solche Überwachung jedoch nicht lösen.

Wie bereits erwähnt, enthalten mechanische Schneidvorrichtungen rotierende Kreismesser, die nebeneinander im Abstand der gewünschten Schnittlinien auf einer gemeinsamen Welle angeordnet sind. Eine zweite derartige Anordnung befindet sich auf der gegenüberliegenden Seite der Elektrodenfolie und bildet entsprechende Gegenmesser. Gegenüberliegende Kreismesser wirken dabei ähnlich wie die Schneiden einer Schere zusammen und erzeugen den gewünschten Schnitt.

Der grundsätzliche Aufbau einer solchen mechanischen Schneidvorrichtung ist z.B. aus der US 2014/0149485 A1 bekannt. Die Schneide des einen Kreismessers wird durch zwei schräg verlaufende Flächen definiert und greift in eine V-Nut ein, die am gegenüberliegenden Kreismesser ausgebildet ist. Diese Ausbildung der Kreismesser soll deren Standzeit verbessern.

Andere Geometrien der Kreismesser sind aus der US 2022/0140304 A1 bekannt. Das untere Kreismesser hat eine zylindrische Außenfläche und eine ebene Seitenfläche, die senkrecht zur jeweiligen Drehachse verläuft. Die Schneide wird durch die umlaufende Kante gebildet, an der die beiden Flächen in einem Winkel von 90° aneinander angrenzen. Beim oberen Kreismesser ist die Außenfläche nicht zylindrisch, sondern umfasst zwei unterschiedlich geneigte Teilflächen. Diese definieren eine umlaufende Schneide, mit der das obere Kreismesser während des Schneidvorgangs in die Elektrodenfolie eintaucht. Eine solche Ausbildung der Kreismesser soll die Freisetzung von Staub und anderen Partikeln während des Schneidvorgangs verringern.

Das Problem der unsauberen und ungleichmäßigen Schnittkanten besteht jedoch auch bei den vorstehend beschriebenen mechanischen Schneidvorrichtungen.

Bekannt sind außerdem Schneidvorrichtungen, bei denen die Elektrodenfolie berührungslos mit Hilfe eines Laserstrahls geschnitten wird. Durch den Wärmeeintrag kann das Elektrodenmaterial, mit dem das Elektrodenband beschichtet ist, jedoch lokal schmelzen, was in der Regel unerwünscht ist.

### AUFGABE UND LÖSUNG

Aufgabe der Erfindung ist es, eine Schneidvorrichtung zum Schneiden einer bandförmigen Elektrodenfolie in schmalere Streifen anzugeben, mit der sich gleichmäßigere und sauberere Schnittkanten erzeugen lassen.

Zur Lösung dieser Aufgabe wird eine Schneidvorrichtung vorgeschlagen, die eine erste Welle und eine zweite Welle hat, die parallel zu der ersten Welle verläuft. Die Vorrichtung hat einen Antrieb, der dazu eingerichtet ist, die erste Welle und die zweite Welle in eine gegenläufige Drehung zu versetzen. An der ersten Welle ist ein erstes Paar von ersten Kreismessern drehfest befestigt. An der zweiten Welle ist ein zweites Paar von zweiten Kreismessern drehfest befestigt. Erfindungsgemäß hat jeder Kreismesser eine radial nach außen weisende zylindrische Außenfläche und eine ebene kreisringförmige Seitenfläche, die senkrecht zu der jeweiligen Drehachse verläuft und dort, wo sie an die Außenfläche angrenzt, eine umlaufende Schneide bildet. Die Schneiden der zweiten Kreismesser des zweiten Paars sind einander zugewandt und durch einen umlaufenden Zwischenraum voneinander getrennt. Die Schneiden der ersten Kreismesser des ersten Paars sind voneinander abgewandt und greifen so in den Zwischenraum ein, dass aneinander angrenzende erste und zweite Kreismesser zur Erzeugung jeweils einer Schneidkante in der Elektrodenfolie zusammenwirken.

Die Erfindung beruht zum einen auf der Überlegung, dass bei den meisten im Stand der Technik bekannten Schneidvorrichtungen die Schneiden asymmetrisch sind, d. h. von zwei Schneidflächen definiert werden, die unterschiedliche Winkel zu der Ebene einschließen, in der sich das jeweilige Kreismesser erstreckt. Wenn mehrere solcher Schneiden nebeneinander angeordnet sind, sind die zu beiden Seiten der Schneide erzeugten Schnittkanten ebenfalls unterschiedlich. Bei der erfindungsgemäßen Schneidvorrichtung hingegen wirken zur Erzeugung eines Schnitt jeweils zwei Schneiden zusammen, deren Schneidflächen in einem Winkel von 90° zueinander angeordnet sind. Dadurch werden beide Schnittkanten eines jeden Elektrodenstreifens genau mit der gleichen Schneidgeometrie erzeugt, wodurch Abweichungen zwischen den gegenüberliegenden Schnittkanten vermieden werden.

Außerdem sind nicht nur die Schnittkanten jedes einzelnen Streifens identisch, sondern auch die Schnittkanten benachbarter Streifen, so dass alle von der Vorrichtung erzeugten Streifen Schnittkanten mit gleichbleibend hoher Qualität haben.

Zu der hohen Schnittqualität trägt unter anderem bei, dass die die Schneiden festlegenden Schneidflächen in einem Winkel von 90° zueinander angeordnet sind und deswegen eine längere Standzeit haben als schmale messerartige Schneiden. Zudem kann sich aufgrund der zylindrischen Außenflächen der beiden Kreismesser die Elektrodenfolie plan auf den Außenflächen der Kreismesser abstützen, wodurch hohe punktförmige Belastungen und starke Krümmungen der Elektrodenfolie vermieden werden. Dies führt zu einem insgesamt schonenderen Schnitt und in der Folge davon zu Schnittkanten, bei denen weniger Elektrodenmaterial absplittert.

Da die beiden ersten Kreismesser gemeinsam in den Zwischenraum eingreifen, ist es grundsätzlich möglich, die beiden ersten Kreismesser des ersten Paars einstückig auszubilden. Dies stellt allerdings sehr hohe Anforderungen an die Fertigungsgenauigkeit, da die beiden ersten Kreismesser mit einem vorgegebenen Anpressdruck an den zweiten Kreismessern vorbeistreichen sollten. Ähnlich wie bei einer herkömmlichen Schere darf der Anpressdruck nicht zu gering sein, weil ansonsten kein sauberer Schnitt erzielt werden kann. Bei zu großem Anpressdruck ist die Reibung zwischen den Kreismessern zu hoch, was zu unnötigem Verschleiß und problematischer Wärmeentwicklung führt.

Um einen optimalen Anpressdruck der ersten Kreismesser an den zweiten Kreismessern zu gewährleisten, kann zwischen den beiden ersten Kreismessern ein elastisches Element angeordnet sein, das auf die beiden ersten Kreismesser eine zu den angrenzenden zweiten Kreismessern wirkende Druckkraft ausübt. Bei dem elastischen Element kann es sich beispielsweise um eine Scheibe aus einem Elastomer, eine Druckfeder oder um eine Tellerfeder handeln. Das elastische Element stellt sicher, dass der gewünschte Anpressdruck zwischen den jeweils zusammenwirkenden ersten und zweiten Kreismessern erreicht wird.

Während des Schneidvorgangs wird der von den Schneiden der beiden ersten Kreismesser herausgetrennte Elektrodenstreifen geringfügig in den Zwischenraum gedrückt. Wenn der Streifen höheren Zugbelastungen standhält, kann er aus diesem Zwischenraum herausgezogen werden. Streifen, die nur wenige Millimeter breit sind, können dabei jedoch abreißen, weil die Reibungskräfte an den Schnitträndern bei schmalen Streifen genauso groß sind wie bei breiten Streifen.

Um zu verhindern, dass der herausgeschnittene Elektrodenstreifen sich im Zwischenraum aufwickelt und ggf. beim Herausziehen abreißt, kann sich durch den umlaufenden Zwischenraum ein Auswerferring erstrecken, der um eine von der zweiten Welle unabhängige und exzentrisch dazu angeordnete Drehachse drehbar gelagert ist. Aufgrund der exzentrischen Anordnung wird der herausgeschnittene Streifen von einer vorzugsweise kreiszylindrischen Oberfläche des Auswerferrings in radialer Richtung aus dem Zwischenraum herausgehoben. Ein Antrieb für eine Drehung des Auswerferrings um die Drehachse ist im Allgemeinen nicht erforderlich, da der unter Zugspannung stehende herausgeschnittene Streifen den Auswerferring reibungsarm mitführt.

Um eine unabhängige Drehachse für den Auswerferring zu realisieren, kann sich dieser auf zwei drehbar gelagerten Rollen abstützen. Der Auswerferring ruht somit aufgrund seines Eigengewichts auf den beiden Rollen und ist nicht an einer zentralen Welle befestigt.

Um die Breite der Streifen festzulegen, kann zwischen den beiden Kreismessern des zweiten Paars ein zerstörungsfrei austauschbares Distanzelement angeordnet sein, das die axiale Breite des Zwischenraums festlegt. Bei sehr kleinen Änderungen der Breite der herausgeschnittenen Streifen müssen die ersten Kreismesser nicht verstellt werden, wenn diese mithilfe des oben erwähnten elastischen Elements gegen die zweiten Kreismesser gedrückt werden. Falls auch größere Änderungen der Breite der Streifen möglich sein sollen, sollten auch zwischen den ersten Kreismessern austauschbare Distanzelemente vorgesehen sein.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend an-hand der Figuren erläutert sind.
- Figuren 1a und 1b: illustrieren die Aufteilung von Elektrodenbändern in schmale Streifen sowie die unmittelbar vor- und nachgelagerten Fertigungsschritte während der Herstellung von Batterien gemäß zwei unterschiedlichen Varianten.
- Figur 2: zeigt eine erfindungsgemäße Schneidvorrichtung in einem Längsschnitt.
- Figur 3: ist ein vergrößerter Ausschnitt aus der Figur 2.
- Figur 4: ist ein Längsschnitt durch eine Schneidvorrichtung gemäß einem zweiten Ausführungsbeispiel, bei dem die Schneidvorrichtung einen Auswerferring umfasst.
- Figur 5: zeigt einen Querschnitt durch die in der Figur 4 gezeigte Schneidvorrichtung entlang der Linie V-V.
- Figur 6: ist ein Längsschnitt durch eine Schneidvorrichtung gemäß einem dritten Ausführungsbeispiel, bei dem sich zwischen zwei ersten Schneidmessern ein elastisches Element befindet.
- Figur 7: ist ein Längsschnitt durch eine Schneidvorrichtung gemäß einem vierten Ausführungsbeispiel, bei dem mehrere Gruppen von Kreismessern angeordnet sind, um insgesamt neun Streifen zu schneiden.
- Figur 8: ist ein Foto von einem Elektrodenstreifen, der mit einer herkömmlichen Schneidvorrichtung geschnitten wurde.
- Figur 9: ist ein Foto von einem Elektrodenstreifen, der von einer erfindungsgemäßen Schneidvorrichtung geschnitten wurde.

### BESCHREIBUNG VON AUSFÜHRUNGSBEISPIELEN

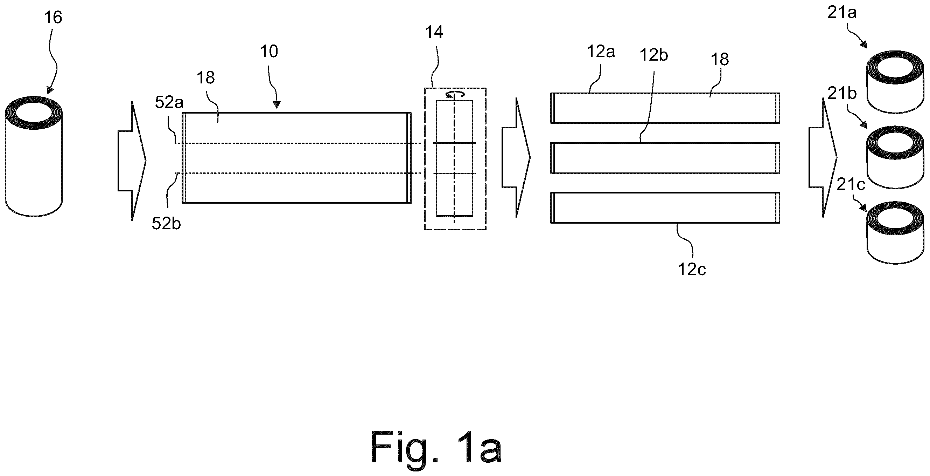

Die Figur 1a illustriert schematisch die Auftrennung eines Elektrodenbands 10 in mehrere schmale Elektrodenstreifen 12a, 12b, 12c mithilfe einer Schneidvorrichtung 14 gemäß einer ersten Variante.

Wie eingangs bereits beschrieben wurde, wird das Elektrodenband 10 durch ein- oder beidseitige Beschichtung einer dünnen metallischen Kollektorfolie hergestellt. Nach dem Trocknen und Kalandrieren wird das Elektrodenband normalerweise zu einer Bandrolle 16 aufgerollt, die in der Figur 1a links dargestellt ist. Das rechts daneben dargestellte Elektrodenband 10 ist im dargestellten Ausführungsbeispiel in Querrichtung durchgehend mit einer Beschichtung 18 versehen.

Mithilfe der Schneidvorrichtung 14 wird das Elektrodenband 10 in die drei Elektrodenstreifen 12a, 12b, 12c so unterteilt, dass jeder Elektrodenstreifen 12a, 12b, 12c die gleiche Breite hat und in Querrichtung vollständig beschichtet ist. Auf diese Weise erhält man drei identische Elektrodenstreifen 12a, 12b, 12c. Zur Herstellung von Batteriezellen werden die Elektrodenstreifen 12a, 12b, 12c in der Regel um einen Wickelkern gewickelt. Die aufgewickelten Elektrodenstreifen 12a, 12b, 12c sind rechts in der Figur 1a angedeutet und mit 21a, 21b und 21c bezeichnet.

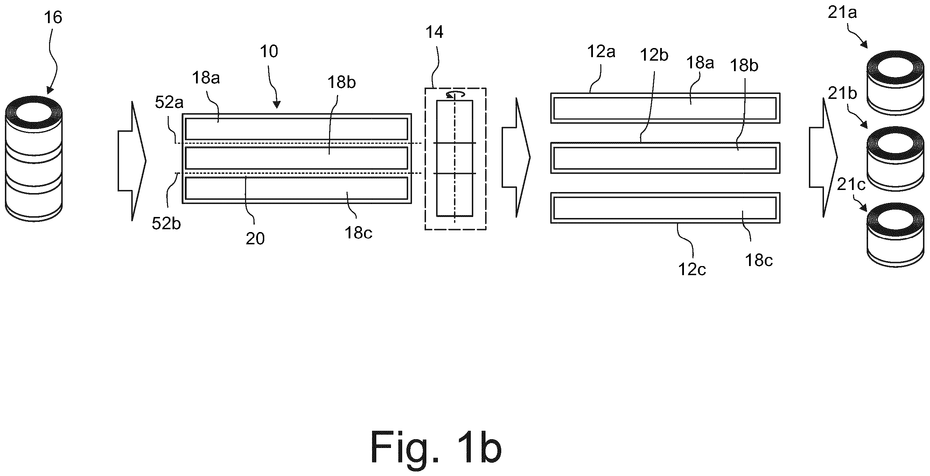

Bei der in der Figur 1b gezeigten zweiten Variante sind mehrere einzelne beschichtete Bereiche 18a, 18b, 18c durch unbeschichtete Bereiche 20 voneinander getrennt.

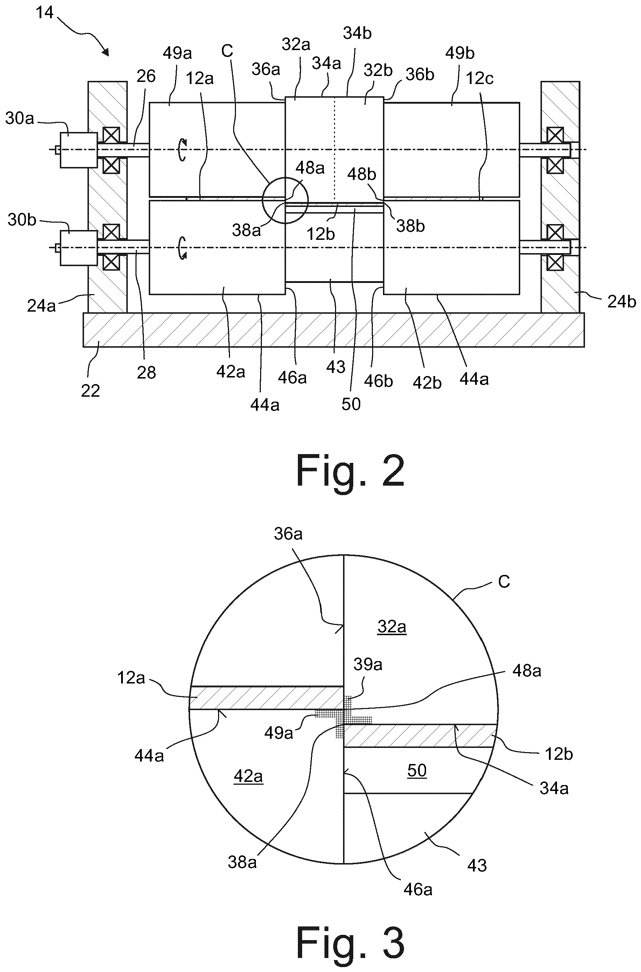

Die Figur 2 zeigt die Schneidvorrichtung 14 schematisch in einem axialen Längsschnitt.

Die Schneidvorrichtung 14 umfasst im dargestellten Ausführungsbeispiel eine Basis 22, die zwei einander gegenüberliegende Ständer 24a, 24b trägt, an denen eine erste Welle 26 und eine zweite Welle 28 drehbar gelagert sind.

Die Schneidvorrichtung 14 hat im dargestellten Ausführungsbeispiel zwei Antriebe 30a, 30b, mit deren Hilfe die beiden Wellen 26, 28 in eine gegenläufige Drehbewegung versetzt werden können. Die gegenläufige Drehung um die strichpunktiert eingezeichnete Drehachsen ist in der Figur 2 durch Pfeile angedeutet. Im dargestellten Ausführungsbeispiel ist jeder Welle 26, 28 ein eigener Antrieb 30a bzw. 30b zugeordnet. In vielen Fällen ist es zweckmäßiger, nur einen Antrieb vorzunehmen, der über ein geeignetes Getriebe auf beide Wellen 26, 28 wirkt.

An der ersten Welle 26 ist ein erstes Paar von ersten Kreismessern 32a, 32b drehfest befestigt. Im dargestellten Ausführungsbeispiel sind die beiden Kreismesser 32a, 32b einstückig ausgebildet; bei einem weiter unten beschriebenen Ausführungsbeispiel sind die beiden Kreismesser 32a, 32b voneinander getrennte Bauteile. Um die beiden Kreismesser 32a, 32b bei dem in der Figur 2 gezeigten Ausführungsbeispiel unterscheiden zu können, ist eine vertikale punktierte Linie eingezeichnet, die man als virtuelle Grenzlinie zwischen den beiden ersten Kreismessern 32a, 32b ansehen kann.

Jedes der beiden ersten Kreismesser 32a, 32b hat eine radial nach außen weisende zylindrische Außenfläche 34a bzw. 34b und eine ebene kreisringförmige Seitenfläche 36a bzw. 36b. Die Seitenflächen 36a, 36b verlaufen senkrecht zu der strichpunktiert angedeuteten Drehachse der ersten Welle 26 und bilden dort, wo sie an die zylindrische Außenfläche 32a bzw. 32b angrenzt, eine umlaufende Schneide.

Die Figur 3 zeigt einen vergrößerten Ausschnitt C aus der Figur 2, in dem die durch die Außenfläche 32a und die Seitenfläche 34a gebildete Schneide besser erkennbar und mit 38a bezeichnet ist. Die Schneide 38a wird somit durch zwei Flächen definiert, die in einem Winkel von 90° zueinander angeordnet sind. Die Außenfläche 34a und die Seitenfläche 36a des ersten Kreismessers 32a sind in einem durch eine Schraffur 39a angedeuteten Bereich geschliffen, um eine scharfe Schneide 38a zu erhalten.

Das andere erste Kreismesser 32b unterscheidet sich vom Kreismesser 32a lediglich durch die spiegelsymmetrische Anordnung. Die beiden Schneiden 38a, 38b sind dadurch voneinander abgewandt und weisen somit zu den Ständern 24a bzw. 24b.

An der zweiten Welle 28 ist ein zweites Paar von zweiten Kreismessern 42a, 42b befestigt. Im dargestellten Ausführungsbeispiel wird der Abstand zwischen den zweiten Kreismessern 42a, 42b durch ein zylindrisches Distanzelement 43 festgelegt. Die beiden zweiten Kreismesser 42a, 42b sind genauso aufgebaut wie die ersten Kreismesser 32a, 32b und haben entsprechend jeweils eine zylindrische Außenfläche 44a, 44b und ebene kreisringförmige Seitenflächen 46a, 46b, die gemeinsam mit den Außenflächen 44a, 44b Schneiden 48a, 48b festlegen.

Im Unterschied zu den ersten Kreismessern 32a, 32b sind die Schneiden 48a, 48b der zweiten Kreismesser 42a, 42b einander zugewandt und durch einen Zwischenraum 50 voneinander getrennt, dessen axiale Ausdehnung durch das Distanzelement 43 festgelegt wird. Die Schneiden 38a, 38b der ersten Kreismesser 32a, 32b greifen so in den Zwischenraum 50 ein, dass aneinander angrenzende erste und zweite Kreismesser zur Erzeugung jeweils einer Schnittkante im Elektrodenband 10 zusammenwirken. Zu diesem Zweck wird das Elektrodenband in einer Ebene, die senkrecht zur Papierebene der Figur 2 verläuft, mithilfe von nicht dargestellten Transportrollen zugeführt. Obwohl die tangentiale Geschwindigkeit der Kreismesser 32a, 32b, 42a, 42b in der Regel deutlich höher ist als die Fördergeschwindigkeit des Elektrodenbandes 10, bewirken die zylindrischen Außenflächen 34a, 34b, 44a, 44b der Kreismesser eine präzise Führung des Elektrodenbandes 10 in der Schnittzone, so dass das Elektrodenband 10 dort nicht nach oben oder unten ausweichen kann. Diese Führung kann durch zusätzliche zylindrische Führungsrollen 49a, 49b ohne Schneidfunktionen unterstützt werden, die auf der ersten Welle 26 drehfest befestigt sind.

Wie in dem vergrößerten Ausschnitt der Figur 3 erkennbar ist, durchtrennen die beiden zusammenwirkenden Schneiden 38a, 48a der beiden Kreismesser 32a, 42a das Elektrodenband 10 entlang zweier Schnittlinien, die in den Figuren 1a und 1b durch gestrichelte Linien 52a, 52b angedeutet sind. Dadurch wird das Elektrodenband 10 in die drei Elektrodenstreifen 12a, 12b, 12c gleicher Breite zerteilt. Die Elektrodenstreifen 12a, 12b, 12c können dann aufgewickelt werden, wie dies oben anhand der Figuren 1a und 1b erläutert wurde.

Da die geometrischen Verhältnisse beim Schnitt entlang der Schnittlinien 52a, 52b identisch sind, haben auch die Schnittkanten der Elektrodenstreifen 12a, 12b, 12c alle die gleiche Qualität.

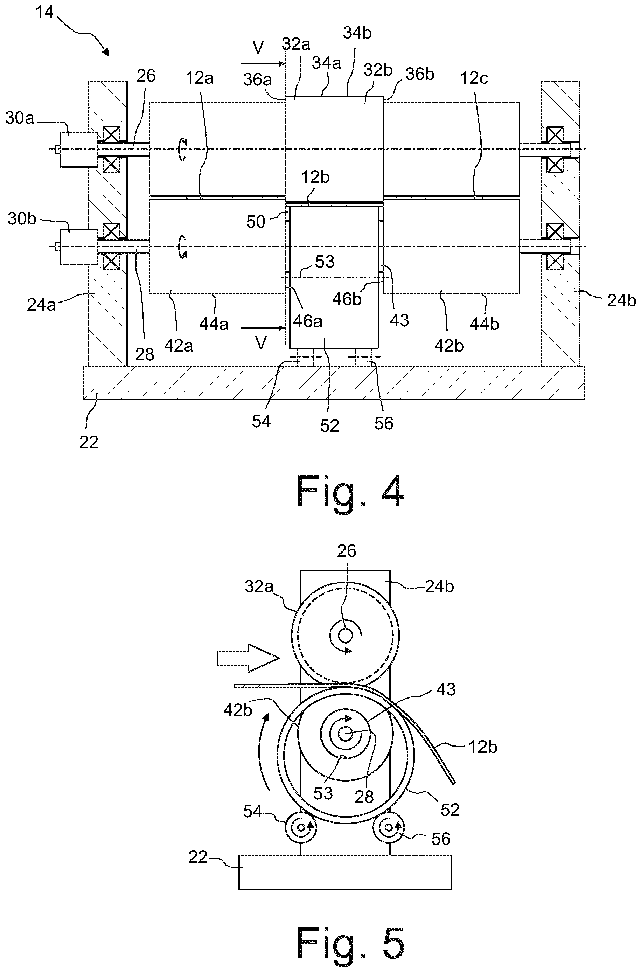

Die Figur 4 zeigt eine erfindungsgemäße Schneidvorrichtung 14 gemäß einem zweiten Ausführungsbeispiel. Bei der dort gezeigten Schneidvorrichtung 14 hat das Distanzelement 43 zwischen den beiden zweiten Kreismessern 42a, 42b einen kleineren Durchmesser. Wie am besten in dem in der Figur 5 gezeigten Querschnitt entlang der Linie V-V erkennbar ist, erstreckt sich durch einen Teil des Zwischenraums 50 ein Auswerferring 52, der um eine von der zweiten Welle 28 unabhängige Drehachse 53 drehbar gelagert ist, die parallel, aber exzentrisch zur Drehachse der zweiten Welle 28 verläuft. Im dargestellten Ausführungsbeispiel wird diese Drehachse nicht durch eine Welle definiert, sondern durch zwei drehbar gelagerte und nicht angetriebene Stützrollen 54, 56, auf denen der Auswerferring 52 mit seiner zylindrischen Außenfläche abrollen kann.

Der Auswerferring 52 dient dazu, den mittleren Elektrodenstreifen 12b, der durch die ersten Kreismesser 32a, 32b geringfügig in den Zwischenraum 50 gedrückt wurde, aus diesem herausdrücken. Dadurch wird zuverlässig verhindert, dass sich der Elektrodenstreifen 12b im Zwischenraum 50 verfängt und auf das Distanzelement 43 aufwickelt. Aufgrund der exzentrischen Anordnung der Drehachse 53 und des größeren Durchmessers des Auswerferrings 52 wird der Elektrodentreifen 12b aus dem Zwischenraum 50 zwischen den beiden Kreismessern 42a, 42b kontinuierlich herausgedrückt. Ein Antrieb des Auswerferrings 52 ist im Allgemeinen nicht erforderlich, sofern der Auswerferring 52 so leichtgängig gelagert ist, dass beim Herausdrücken keine größere Reibung zwischen der radialen Außenfläche des Auswerferrings 52 und dem Elektrodenstreifen 12b entsteht.

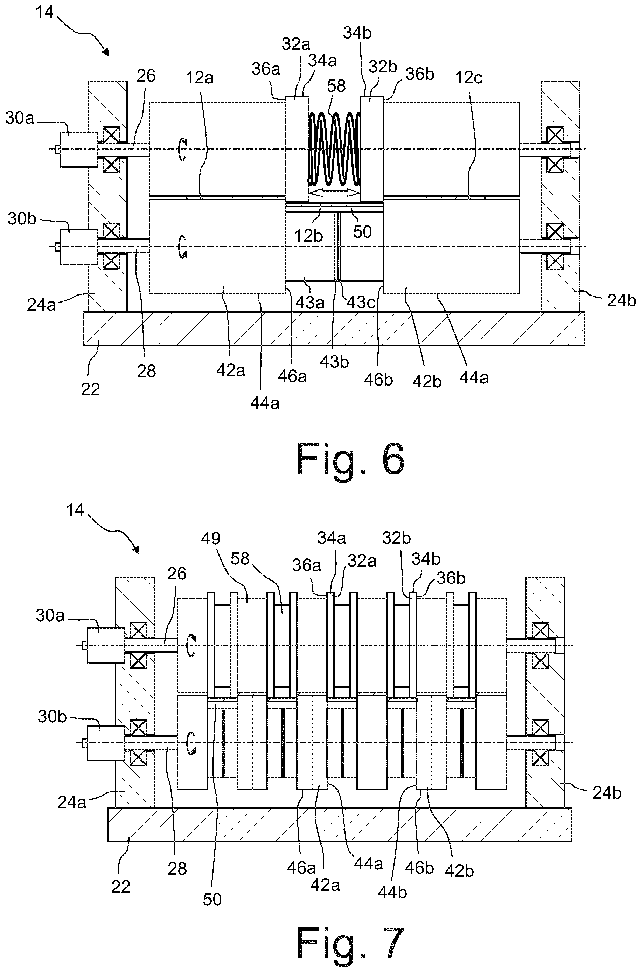

Die Figur 6 zeigt in einem an die Figur 2 angelehnten Längsschnitt eine Schneidvorrichtung 14 gemäß einem dritten Ausführungsbeispiel, bei dem die beiden ersten Kreismesser 32a, 32b nicht einstückig, sondern als getrennte Bauteile ausgebildet sind. Zwischen den beiden ersten Kreismessern 32a, 32b ist ein elastisches Element 58 angeordnet, das auf die beiden ersten Kreismesser 32a, 32b eine zu den angrenzenden zweiten Kreismessern 42a, 42b wirkende Druckkraft ausübt. In der Figur 6 ist diese Kraftwirkung durch einen Doppelpfeil angedeutet.

Die Druckkraft ist so bemessen, dass die Seitenflächen 36a, 36b der ersten Kreismesser 32a, 32b dicht an den Außenflächen 46a, 46b der jeweils zugeordneten zweiten Kreismesser 42a, 42b anliegen, ohne dass durch übermäßige Reibung ein starker Verschleiß entsteht. Mithilfe des elastischen Elements 58 können die Anforderungen an die Fertigungsgenauigkeit reduziert werden. Es ist sogar in engen Grenzen möglich, die Breite des mittleren Elektrodenstreifens 12b zu verändern, ohne an der ersten Welle 26 Veränderungen vornehmen zu müssen. Im dargestellten Ausführungsbeispiel wird die Breite des Zwischenraums 50 durch mehrere unterschiedlich breite Distanzelemente 43a bis 43c festgelegt. Soll beispielsweise die Breite des Elektrodenstreifens 12b geringfügig durch Entnahme des schmalsten Distanzelements 43c verringert werden, sorgt das elastische Element 58 dafür, dass die beiden ersten Kreismesser 32a, 32b weiterhin mit den zweiten Kreismessern 42a, 42b zusammenwirken können.

In der Figur 6 ist das elastische Element 58 aus Gründen der Anschaulichkeit als einfache Druckfeder ausgebildet. In der Praxis werden meist andere elastische Elemente bevorzugt sein, z.B. Tellerfedern.

Bei dem in der Figur 7 gezeigten vierten Ausführungsbeispiel wird das Elektrodenband 10 nicht nur in drei, sondern in neun Elektrodenstreifen zerschnitten. Der in der Figur 6 gezeigte Aufbau muss dazu lediglich mehrfach in axialer Richtung wiederholt werden. Das elastische Element 58 ist bei diesem Ausführungsbeispiel als Scheibe ausgebildet, die aus einem Elastomer besteht.

Während die ersten Kreismesser 32a, 32b wieder wie beim dritten Ausführungsbeispiel gemäß der Figur 6 als getrennte Bauteile ausgebildet sind, ist nun jeweils ein zweites Kreismesser 42a einer zweiten Gruppe mit einem Kreismesser 42b eine benachbarten Gruppe einstückig ausgebildet. Eine virtuelle Trennlinie zwischen zwei einstückig ausgebildeten zweiten Kreismessern 42a, 42b ist gepunktet angedeutet.

Zusätzlich können Auswerferringe vorgesehen sein, wie sie bei dem in den Figuren 4 und 5 gezeigten zweiten Ausführungsbeispiel den Auswurf der Elektrodenbänder aus den Zwischenräumen 50 unterstützen.

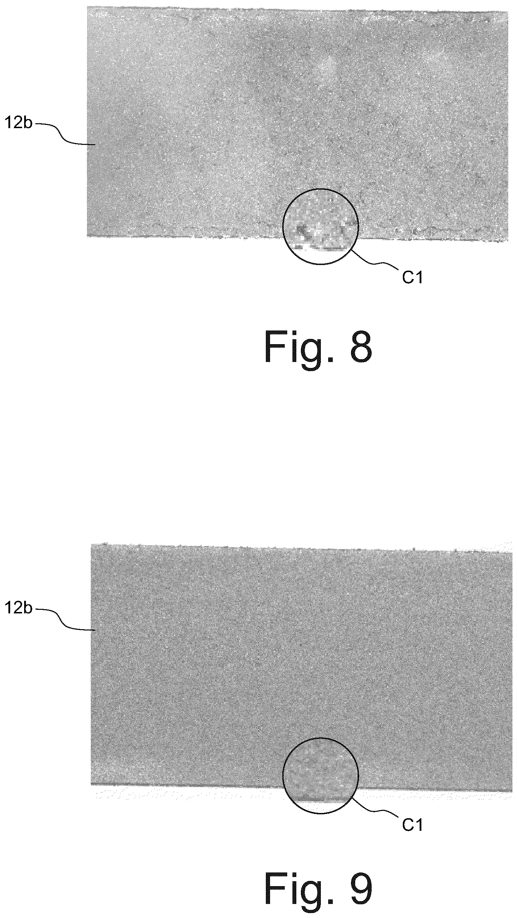

Die Figur 8 zeigt ein Foto eines Abschnitts eines gemäß der Figur 1a konfigurierten Elektrodenstreifens, der mit einer herkömmlichen Schneidvorrichtung geschnitten wurde. Man erkennt an den beiden Schnittkanten streifenförmige und sich in Längsrichtung erstreckende Zonen, die durch das Abknicken des Elektrodenbands im Bereich der herkömmlichen spitzen Schneiden entstehen. Wie in dem vergrößerten Ausschnitt C1 erkennbar ist, ist die Schnittkante teilweise stark ausgefranst und weist deutlich erkennbare Beschädigungen im Bereich der porösen Beschichtung auf.

Die Figur 9 zeigt ein entsprechendes Foto eines Elektrodenstreifens 12, der mit der erfindungsgemäßen Schneidvorrichtung 14 geschnitten wurde. Die durch Abknicken entstandenen streifenförmigen Beschädigungen treten mit der erfindungsgemäßen Schneidvorrichtung 14 nicht auf. Im vergrößerten Ausschnitt C2 ist erkennbar, dass die Beschichtung bis unmittelbar an die Schnittkante heranreicht und unbeschädigt ist. Dadurch führt der in der Figur 9 ausschnittsweise gezeigte Elektrodenstreifen 12 nach dem Wickeln zu einer qualitativ deutlich höherwertigeren Batteriezelle.

## Patentansprüche

1. Vorrichtung zum Schneiden einer bandförmigen Elektrodenfolie (10) in schmalere Streifen (12a, 12b ,12c), wobei die Vorrichtung (14) die folgenden Merkmale aufweist:
a. die Vorrichtung hat eine erste Welle (26) und eine zweite Welle (26), die parallel zu der ersten Welle (26) verläuft;
b. die Vorrichtung hat einen Antrieb (30a, 30b), der dazu eingerichtet ist, die erste Welle (26) und die zweite Welle (28) in eine gegenläufige Drehung zu versetzen,
c. an der ersten Welle (26) ist ein erstes Paar von ersten Kreismessern (32a, 32b) drehfest befestigt,
d. an der zweiten Welle (28) ist ein zweites Paar von zweiten Kreismessern (42a, 42b) drehfest befestigt,
**gekennzeichnet durch** die folgenden weiteren Merkmale:
e. jedes Kreismesser (32a, 32b, 42a, 42b) hat eine radial nach außen weisende zylindrische Außenfläche (34a, 34b, 44a, 44b) und eine ebene kreisringförmige Seitenfläche (36a, 36b, 46a, 46b), die senkrecht zur jeweiligen Drehachse verläuft und dort, wo sie an die Außenfläche (34a, 34b, 44a, 44b) angrenzt, eine umlaufende Schneide (38a, 38b, 48a, 48b) bildet,
f. die Schneiden (48a, 48b) der zweiten Kreismesser (42a, 42b) des zweiten Paars sind einander zugewandt und durch einen umlaufenden Zwischenraum (50) voneinander getrennt,
g. die Schneiden (38a, 38b) der ersten Kreismesser (32a, 32b) des ersten Paars sind voneinander abgewandt und greifen so in den Zwischenraum (50) ein, dass aneinander angrenzende erste und zweite Kreismesser (32a, 32b, 42a, 42b) zur Erzeugung jeweils einer Schnittkante in der Elektrodenfolie (10) zusammenwirken.

2. Vorrichtung nach Anspruch 1 mit dem zusätzlichen Merkmal:
a. zwischen den beiden ersten Kreismessern (32a, 32b) ist ein elastisches Element (58) angeordnet, das auf die beiden ersten Kreismesser (32a, 32b) eine zu den angrenzenden zweiten Kreismessern (42a, 42b) wirkende Druckkraft ausübt.

3. Vorrichtung nach Anspruch 2 mit dem zusätzlichen Merkmal:
a. das elastische Element (58) umfasst ein Elastomer, eine Druckfeder oder eine Tellerfeder.

4. Vorrichtung nach einem der vorhergehenden Ansprüche mit den zusätzlichen Merkmalen:
a. durch den umlaufenden Zwischenraum (50) erstreckt sich ein Auswerferring (52), der um eine von der zweiten Welle (28) unabhängige Drehachse (53) drehbar gelagert ist,
b. die Drehachse (52) ist exzentrisch zur zweiten Welle (28) angeordnet.

5. Vorrichtung nach Anspruch 4 mit dem zusätzlichen Merkmal:
a. der Auswerferring (52) stützt sich auf zwei drehbar gelagerten Rollen (54, 56) ab.

6. Vorrichtung nach einem der vorhergehenden Ansprüche mit dem zusätzlichen Merkmal:
a. zwischen den beiden zweiten Kreismessern (42a, 42b) des zweiten Paars ist ein zerstörungsfrei austauschbares Distanzelement (43; 43a, 43b, 43c) angeordnet, das die axiale Breite des Zwischenraums (50) festlegt.
